# EUROPÄISCHE PATENTSCHRIFT

(11) **EP 1 668 283 B1**
(45) Veröffentlichungstag und Bekanntmachung des Hinweises auf die Patenterteilung: **23.09.2009**
(21) Anmeldenummer: 04762540.5
(22) Anmeldetag: 28.07.2004
(51) Int. Cl.: F16K 31/06

(54) **MAGNETVENTIL MIT GERÄUSCHREDUZIERENDER DÄMPFERSCHEIBE**
SOLENOID VALVE WITH A NOISE-REDUCING DAMPING DISK
VANNE MAGNETIQUE COMPRENANT UN DISQUE AMORTISSEUR REDUCTEUR DE BRUIT

(30) Priorität: 23.09.2003 DE 10343940
(43) Veröffentlichungstag der Anmeldung: 14.06.2006
(73) Patentinhaber: ROBERT BOSCH GMBH, 70442 Stuttgart (DE)
(72) Erfinder: HESS, Juergen, 76534 Baden-Baden (DE); REEB, Georg, 77815 Buehl Eisental (DE)
(86) Internationale Anmeldenummer: PCT/DE2004/001695
(87) Internationale Veröffentlichungsnummer: WO 2005/038322

(56) Entgegenhaltungen:
- EP-A- 0 385 286
- DE-A- 19 809 047
- FR-A- 2 580 557
- US-A- 5 947 442
- US-A- 6 109 301
- US-A1- 2003 155 019
- US-B1- 6 267 350
- US-B1- 6 289 919
- PATENT ABSTRACTS OF JAPAN Bd. 1998, Nr. 02, 30. Januar 1998 (1998-01-30) & JP 9 273653 A (NOK CORP), 21. Oktober 1997 (1997-10-21)

## Beschreibung

Die Erfindung betrifft ein Magnetventil mit den im Oberbegriff des Anspruchs 1 genannten Merkmalen.

### Stand der Technik

Derartige Magnetventile werden insbesondere in Kraftfahrzeugen eingesetzt, zum Beispiel in flüssigkeitsgeregelten Wärmetauschern ihrer Heizungs- und/oder Klimaanlagen oder als Umschaltventile, die einen Kühlmittelstrom aus einem Verbrennungsmotor der Kraftfahrzeuge in einer der beiden Schaltstellungen kurzschließen und in der anderen über einen Wärmetauscher leiten. Die Magnetventile können dabei in Abhängigkeit von der jeweiligen Temperatur in der Heizungs- und/oder Klimaanlage oder in einem Fahrgastraum des Kraftfahrzeugs getaktet angesteuert werden, wobei die Durchflussmenge im Wesentlichen durch den mittleren Zeitquerschnitt bestimmt wird. Das Ventilglied wird durch den Flüssigkeitsdruck und/oder eine auf einen Ventilschaft einwirkende Ventilfeder geöffnet und durch Erregung der auf den Anker einwirkenden Magnetspule geschlossen. Der Raum, in dem der Anker angeordnet ist, ist nicht hermetisch abgedichtet, sondern mit Flüssigkeit gefüllt. Diese Flüssigkeit soll die Bewegung des Ankers hydraulisch dämpfen, um ein abruptes Öffnen bzw. Schließen des Ventils zu verhindern und eine damit verbundene Geräuschentwicklung zu mindern. Wegen des verhältnismäßig großen, zum Toleranzausgleich zwischen den Bauteilen des gesamten Ventils erforderlichen Spiels zwischen dem Anker und der Führungshülse ist jedoch die durch die Flüssigkeit erzielte hydraulische Dämpfung und damit die geräuschmindemde Wirkung relativ gering.

Um die Geräuschentwicklung beim Schließen des Ventils zu mindern, wurde in der EP 0 958 155 B1 der Anmelderin bereits vorgeschlagen, an der dem Ventilglied zugewandten Seite des Ventilschafts Mittel vorzusehen, welche die Geschwindigkeit des Ventilschafts beim Schließen des Ventilglieds verzögern. Diese Mittel können u.a. von einer Dämpfungsscheibe gebildet werden, die am Ventilschaft befestigt ist und mit geringem Spiel in einer mit Flüssigkeit gefüllten Kammer des Ventilgehäuses geführt ist. Bei jeder Bewegung des Ventilglieds muss die Flüssigkeit durch einen engen Ringspalt zwischen einem äußeren Umfang der Dämpfungsscheibe und einem benachbarten Wandteil des Ventilgehäuses strömen, wodurch die Bewegung des Ventilschafts verlangsamt wird. Die Bereitstellung der Dämpfungsscheibe und der Kammer führen jedoch zu einem erhöhten Aufwand bei der Herstellung des Magnetventils. Außerdem müssen relativ enge Toleranzen eingehalten werden, was mit preiswerten Bauteilen infolge der Temperaturdifferenzen der Flüssigkeit beim Betrieb des Ventils in Heizungs- und/oder Klimaanlagen schwierig ist.

Magnetvintile dieser Art sind bereits aus den Druckschritten JP 09273653, US 6267350 und US 5947442 bekannt.

### Vorteile der Erfindung

Bei dem erfindungsgemäßen Magnetventil mit den Merkmalen des Anspruchs 1 wird mit einfachsten baulichen Mitteln und ohne eine Beeinträchtigung der Beweglichkeit des Ankers im Bereich der Dämpferscheibe für ein sehr geringes Spiel im Ringspalt zwischen dem Anker und seiner Führung gesorgt. Die Dämpferscheibe bewirkt somit eine beträchtliche Verstärkung der hydraulischen Dämpfung und infolgedessen eine Verminderung der Geräuschentwicklung. Die Dämpferscheibe erfüllt dabei eine ähnliche Funktion wie ein Kolbenring einer Kolben-/Zylinder-Anordnung, indem sie ohne einen negativen Einfluss auf die zum Bewegen des Ankers erforderlichen Kräfte für eine stärkere Abdichtung des Ringspalts sorgt und somit den Strömungswiderstand bei der Verdrängung von Flüssigkeit am Anker vorbei erhöht.

In bevorzugter Ausgestaltung der Erfindung ist vorgesehen, dass ein Ringspalt zwischen einem inneren Umfang der Dämpferscheibe und dem Anker, der im Bereich der Dämpferscheibe den einzigen Strömungspfad für die verdrängten Flüssigkeit bildet, mindestens über einen Teil und zweckmäßig über die gesamte Länge des Verschiebewegs des Ankers eine lichte Weite von weniger als 0,04 mm und vorzugsweise von weniger als 0,025 mm aufweist.

Eine weitere vorteilhafte Ausgestaltung der Erfindung sieht vor, dass die Dämpferscheibe zwischen der Ringschulter und dem benachbarten Stirnende der Führungshülse begrenzt axial beweglich ist. Dadurch wird bewirkt, dass die zweckmäßig mit ihrem äußeren Umfang im radialem von der Innenwand des erweiterten Teils der Durchtrittsöffnung angeordnete Dämpferscheibe mindestens über einen Teil des Verschiebewegs des Ankers von der vom Anker verdrängten Flüssigkeit gegen das Stirnende der Führungshülse bzw. die Ringschulter angepresst und damit ein Umströmen der Dämpferscheibe durch die Flüssigkeit verhindert wird.

Die Dämpferscheibe kann geschlitzt oder ungeschlitzt sein und besteht bevorzugt aus Bronze, kann jedoch grundsätzlich auch aus einem geeigneten Kunststoffmaterial hergestellt werden, beispielsweise aus Polypropylensulfid.

### Zeichnungen

Die Erfindung wird nachfolgend in einem Ausführungsbeispiel anhand der zugehörigen Zeichnungen näher erläutert. Es zeigen:
- Figur 1: eine Querschnittsansicht eines Magnetventils in seiner bestromten Schließstellung;
- Figur 2: eine Querschnittsansicht des Magnetventils in seiner unbestromten Öffnungsstellung;
- Figur 3: eine vergrößerte Detailansicht des Ausschnitts III aus Figur 1;
- Figur 4: eine vergrößerte Detailansicht des Ausschnitts IV aus Figur 2.

### Beschreibung des Ausführungsbeispiels

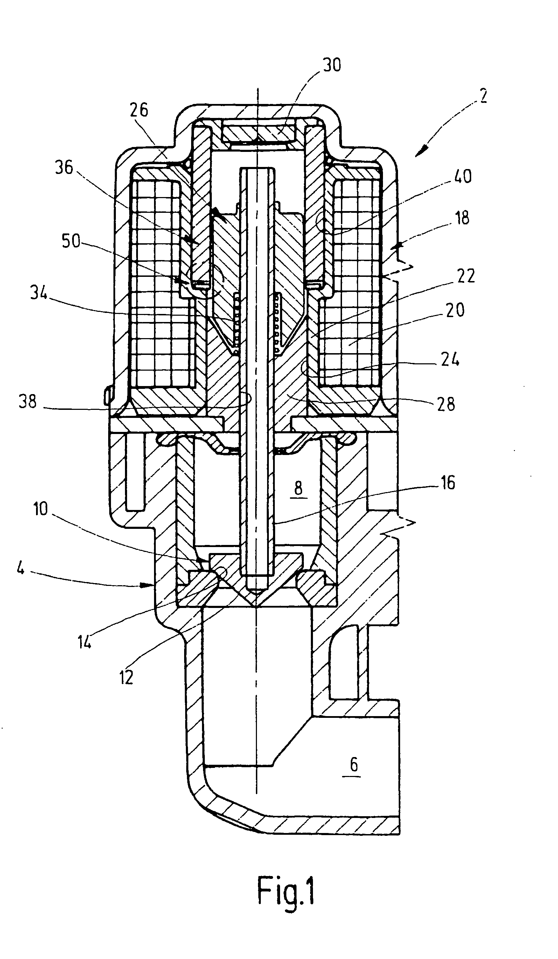

Das in der Zeichnung dargestellte, zwischen einem Heiz- und/oder Kühlkreislauf einer Brennkraftmaschine und einem Heizungswärmetauscher eines Kraftfahrzeugs (nicht dargestellt) angeordnete Magnetventil 2 umfasst ein Ventilgehäuse 4 mit einem mit dem Kühlkreislauf der Brennkraftmaschine verbundenen Zulaufkanal 6 und einem mit dem Heizungswärmetauscher verbundenen Ablaufkanal 8. Innerhalb des Ventilgehäuses 4 befindet sich ein bewegliches Ventilglied 10, das einen Ventilkegel 12 aufweist, der in der in Figur 1 dargestellten Schließstellung des Ventils 2 mit einem Ventilsitz 14 im Gehäuse 4 zusammenwirkt und die Verbindung zwischen dem Zulaufkanal 6 und dem Ablaufkanal 8 versperrt.

Das Ventilglied 10 ist auf einem langgestreckten hohlen Ventilschaft 16 befestigt, der aus dem Ventilgehäuse 4 heraus in einen dichtend auf dem Ventilgehäuse 4 angebrachten Magnettopf 18 übersteht. Der Magnettopf 18 umschließt eine zylindrische Magnetspule 20, die auf einen durch Spritzgießen aus Kunststoff hergestellten Spulenkörper 22 gewickelt ist. Der Spulenkörper 22 weist eine axiale Durchtrittsöffnung 24 für den Ventilschaft 16 auf, auf dessen oberem Ende ein Anker 26 befestigt ist. Der Anker 26 wirkt mit der Magnetspule 20 sowie mit einem starr in einem unteren Teil der Durchtrittsöffnung 24 montierten Ankerkern 28 zusammen und bildet so ein elektromagnetisches Stellglied für die axiale Verlagerung des Ventilglieds 10.

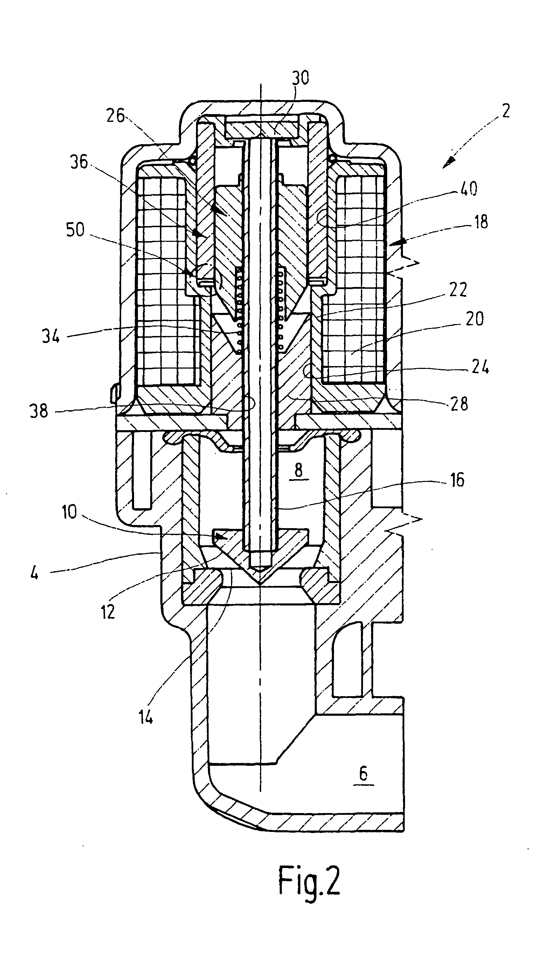

Solange der Magnetspule 20 kein Strom zur Erregung zugeführt wird, drückt der im Heiz- und/oder Kühlkreislauf des Kraftfahrzeugs und damit auch im Zulaufkanal 6 herrschende Flüssigkeitsdruck das Ventilglied 10 in die in Figur 2 dargestellte Öffnungsstellung. In der Öffnungsstellung, in der das obere Stirnende des Ventilschafts 16 gegen einen oberhalb der Durchtrittsöffnung 24 im Magnettopf 18 angebrachten Anschlag 30 anliegt, ist der Ventilkegel 12 vom Ventilsitz 14 abgehoben und die Verbindung zwischen dem Zulaufkanal 6 und dem Ablaufkanal 8 geöffnet. Sobald die Magnetspule 20 durch Stromzufuhr erregt wird, zieht der Ankerkern 28 den Anker 26 entgegen dem Flüssigkeitsdruck im Zulaufkanal 6 und entgegen der Kraft einer zwischen den Anker 26 und den Ankerkern 28 eingesetzten Ventilfeder 34 nach unten in die in Figur 1 dargestellte Schließstellung.

Neben der Magnetspule 20, dem Ankerkern 28, der Ventilfeder 34 und dem Ventilschaft 16 mit dem Anker 26 umschließt der Magnettopf 18 weiter eine in der Durchtrittsöffnung 24 des Spulenkörpers 22 angeordnete Führungshülse 36 für den Anker 26. Der zwischen den Komponenten 16, 20, 26, 28, 34 und 36 im Inneren des Magnettopfs 18 verbleibende Freiraum wird im Betrieb des Magnetventils 2 mit Flüssigkeit aus dem Heiz- und/oder Kühlkreislauf gefüllt, die durch Anlegen eines Unterdrucks bzw. infolge einer Pumpwirkung des auf und ab bewegten Ankers 26 durch einen engen Ringspalt zwischen der Ventilstange 16 und der Innenwand einer Ventilstangenbohrung 38 im Ankerkern 28 unter Verdrängung von Luft in den Freiraum gesaugt wird.

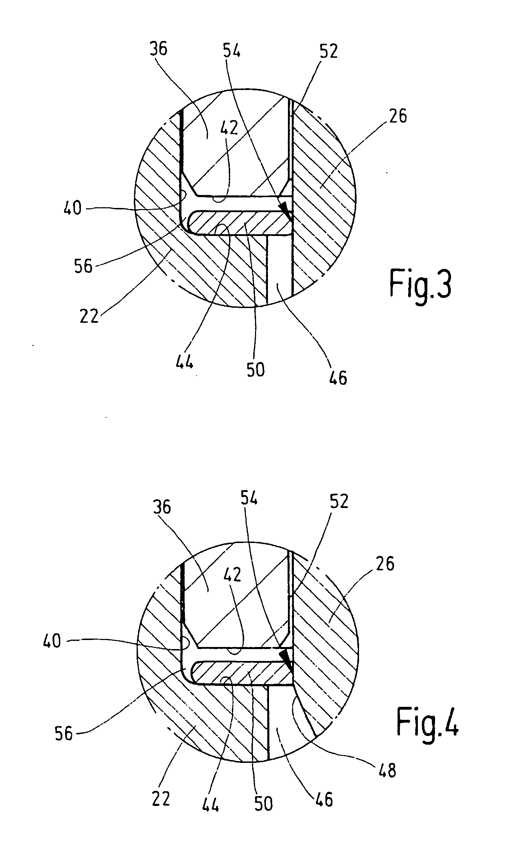

Die zur Führung des Ankers 26 dienende zylindrische Führungshülse 36 ist von oben her in einen erweiterten oberen Teil 40 der abgestuften Durchtrittsöffnung 24 des Spulenkörpers 22 eingesetzt und umgibt in der Öffnungsstellung einen oberen zylindrischen Teil des Ankers 26 in einem radialen Abstand, der wegen der Herstellungs- und Zusammenbautoleranzen der Komponenten 12, 14, 16, 28, 26, 36 nicht beliebig verringert werden kann. Wie am besten in Figur 3 und 4 dargestellt, ist ihr unteres Stirnende 42 in einem axialen Abstand von etwa 0,5 bis 1,5 mm über einer Ringschulter 44 angeordnet, die den erweiterten Teil 40 der Durchtrittsöffnung 24 des Spulenkörpers 22 nach unten zu begrenzt. An die Ringschulter 44 schließt sich nach unten zu ein verengter Teil 46 der Durchtrittsöffnung 24 an, in den am unteren Ende der Ankerkern 28 eingepasst ist. Das obere Ende des verengten Teils 46 der Durchtrittsöffnung 24 nimmt den nach unten aus der Führungshülse 36 überstehenden Teil des Ankers 26 auf, dessen nach unten zu verjüngtes unteres Ende eine konische Umfangsfläche besitzt. Der Übergang 48 zwischen der zylindrischen Umfangsfläche des oberen Teils und der konischen Umfangsfläche des unteren Endes des Ankers 26 befindet sich in der Öffnungsstellung des Ventils 2 (Figur 4) in einem geringen axialen Abstand unterhalb des unteren Stirnendes 42 der Führungshülse 36.

Wegen des zum Toleranzausgleich zwischen der Führungshülse 36 und dem Anker 26 vorhandenen, verhältnismäßig großen radialen Spiels ist die hydraulische Dämpfung des Ankers 26 bei seiner Axialbewegung in der Führungshülse 36 relativ gering. Um trotzdem ein abruptes Öffnen bzw. Schließen des Ventils 2 zu vermeiden und dadurch eine beim Öffnen bzw. Schließen verursachte Geräuschentwicklung zu minimieren, ist zwischen der Ringschulter 44 und dem benachbarten Stirnende 42 der Führungshülse 36 eine den Anker 26 umgebende Dämpferscheibe 50 angeordnet. Die Dämpferscheibe 50 soll an dieser Stelle für eine Verringerung der Querschnittabmessungen eines Ringspalts 52 zwischen dem Anker 26 und seiner Führung sorgen, durch den ein Teil der im Magnettopf 18 eingeschlossenen Flüssigkeit bei jeder Axialbewegung des Ankers 26 an diesem vorbei verdrängt wird.

Wie ebenfalls am besten in Figur 3 und 4 dargestellt, weist die Dämpferscheibe 50 eine kreisförmige Bohrung für den Anker 26 auf, deren Innendurchmesser über die Hubhöhe des Ankers 26 an den Außendurchmesser von dessen oberem zylindrischem Teil angepasst ist, so dass ein zwischen dem inneren Umfang der Dämpferscheibe 50 und der äußeren Umfangsfläche des Ankers 26 gebildeter Ringspalt 54 eine sehr kleine lichte Weite von etwa 0,02 mm aufweist. Ein zwischen dem äußeren Umfang der Scheibe 50 und dem inneren Umfang des erweiterten Teils der Durchtrittsöffnung 24 gebildeter Ringspalt 56 weist hingegen verhältnismäßig große Abmessungen auf, so dass sich die Scheibe 50 im Zwischenraum zwischen der Ringschulter 44 und dem unteren Stirnende 42 der Führungshülse 36 in der Flüssigkeit axial bewegen kann.

Die Dämpferscheibe 50 weist zwei ebene Breitseitenflächen auf, die einer komplementären ebenen unteren Stirnfläche der Führungshülse 36 bzw. einer komplementären ebenen Ringfläche der Ringschulter 44 gegenüberliegen. Weiter kann die Dämpferscheibe 50 ähnlich wie ein Kolbenring eines Kolbens eines Verbrennungsmotors an einer Stelle entlang ihres Umfangs radial oder schräg geschlitzt sein, um Toleranzprobleme zu vermeiden.

Die Dämpferscheibe 50 ist vorzugsweise aus Bronze hergestellt, jedoch ist es grundsätzlich auch möglich, andere Metalle oder Kunststoffe einzusetzen, wie beispielsweise Polypropylensulfid (PPS).

Bei der Abwärtsbewegung des Ankers 26 in die Schließstellung drückt die vom Anker 26 verdrängte Flüssigkeit die Dämpferscheibe 50 nach oben, so dass sie sich mit ihrer oberen Breitseitenfläche dichtend gegen die benachbarte untere Stirnfläche der Führungshülse 36 anlegt und die verdrängte Flüssigkeit nur noch durch den engen Ringspalt 54 zwischen dem inneren Umfang der Dämpferscheibe 50 und dem äußeren Umfang des Ankers 26 hindurchtreten kann, was eine starke hydraulische Dämpfung des Ankers 26 bewirkt. Bei der Aufwärtsbewegung des Ankers 26 in die Öffnungsstellung wird die Dämpferscheibe 50 umgekehrt von der vom Anker 26 verdrängten Flüssigkeit nach unten gegen die Ringschulter 44 gedrückt, so dass sie mit ihrer unteren Breitseitenfläche dichtend gegen diese anliegt und einen Hindurchtritt der verdrängten Flüssigkeit durch den Ringspalt 54 erzwingt, wodurch auch diese Bewegung des Ankers 26 einer starken hydraulischen Dämpfung unterliegt.

Bei Vergleichsversuchen, bei denen die Geräuschentwicklung beim Schließen eines Magnetventils 2 ohne bzw. mit Dämpferscheibe 50 gemessen wurde, konnte daher erwartungsgemäß bei Verwendung der Dämpferscheibe 50 eine erhebliche Geräuschminderung festgestellt werden.

Die Kennlinie der hydraulischen Dämpfung des Ankers 26 und damit des Ventilglieds 10 lässt sich nach Wunsch verändern, indem man den Innendurchmesser der Dämpferscheibe 50 oder die Form der äußeren Umfangsfläche des Ankers 26 verändert, die sich zwischen der Schließstellung und der Öffnungsstellung an der Dämpferscheibe 50 vorbeibewegt. Zum Beispiel würde eine in der Mitte dieses Bereichs angeordnete und sich über einen Teil des Verschiebewegs des Ankers 26 erstreckende Einschnürung über die Höhe der Einschnürung für ein größeres Spiel zwischen der Dämpferscheibe 50 und dem Anker 26 und damit über einen mittleren Teil der Distanz zwischen Schließstellung und Öffnungsstellung für eine weniger stark hydraulisch gebremste Bewegung des Ankers 26 sorgen.

## Patentansprüche

1. Magnetventil (2), insbesondere für eine flüssigkeitsgeregelte Heiz- und/oder Kühlanlage, mit einem mindestens einen Zulaufkanal (6) und mindestens einen Ablaufkanal (8) aufweisenden Ventilgehäuse (4) und einem elektromagnetisch geschalteten Ventilglied (10), das die Verbindung zwischen den Zulaufkanal (6) dem Ablaufkanal (8) in einer Schaltstellung herstellt und in der anderen Schaltstellung sperrt, wobei das Ventilglied (10) starr mit einem Anker (26) verbunden ist, der unter Verdrängung von Flüssigkeit in einer Führungshülse (36) einer Magnetspule (20) verschiebbar ist, die in einen von einer Ringschulter (44) begrenzten erweiterten Teil einer Durchtrittsöffnung (24) der Magnetspule (20) eingesetzt ist, **gekennzeichnet durch** eine den Anker (26) umgebende, zwischen der Ringschulter (44) und einem benachbarten Stirnende (42) der Führungshülse (36) angeordnete Dämpferscheibe (50).

2. Magnetventil nach Anspruch 1, **dadurch gekennzeichnet, dass** der Anker (26) in Bezug zur Dämpferscheibe (50) axial beweglich ist.

3. Magnetventil nach einem der vorhergehenden Ansprüche, **dadurch gekennzeichnet, dass** ein Ringspalt (54) zwischen einem inneren Umfang der Dämpferscheibe (50) und dem Anker (26) mindestens über einen Teil des Verschiebewegs des Ankers (26) eine lichte Weite von weniger als 0,05 mm und vorzugsweise von weniger als 0,025 mm aufweist.

4. Magnetventil nach Anspruch 3, **dadurch gekennzeichnet, dass** der Ringspalt (54) über den gesamten Verschiebeweg des Ankers (26) eine lichte Weite von weniger als 0,05 mm und vorzugsweise von weniger als 0,025 mm aufweist.

5. Magnetventil nach einem der vorhergehenden Ansprüche, **dadurch gekennzeichnet, dass** die Dämpferscheibe (50) zwischen der Ringschulter (44) und dem benachbarten Stirnende (42) der Führungshülse (36) begrenzt axial beweglich ist.

6. Magnetventil nach einem der vorhergehenden Ansprüche, **dadurch gekennzeichnet, dass** die Dämpferscheibe (50) mindestens über einen Teil des Verschiebewegs des Ankers (26) von der vom Anker (26) verdrängten Flüssigkeit gegen das Stirnende (42) der Führungshülse (36) bzw. die Ringschulter (44) angepresst wird.

7. Magnetventil nach einem der vorhergehenden Ansprüche **dadurch gekennzeichnet, dass** ein äußerer Umfang der Dämpferscheibe (50) in radialem Abstand von einer Innenwand des erweiterten Teils (40) der Durchtrittsöffnung (24) angeordnet ist.

8. Magnetventil nach einem der vorhergehenden Ansprüche, **dadurch gekennzeichnet, dass** die Dämpferscheibe (50) aus Bronze besteht.

9. Magnetventil nach einem der vorhergehenden Ansprüche, **dadurch gekennzeichnet, dass** die Dämpferscheibe aus Polypropylensulfid besteht.

10. Magnetventil nach einem der vorhergehenden Ansprüche, **dadurch gekennzeichnet, dass** die Dämpferscheibe geschlitzt ist.

11. Magnetventil nach einem der Ansprüche 1 bis 9, **dadurch gekennzeichnet, dass** die Dämpferscheibe keine Unterbrechung aufweist.

## Claims

1. Solenoid valve (2), in particular for a liquid-controlled heating and/or cooling system, having a valve housing (4) that has at least one inflow duct (6) and at least one outflow duct (8), and having an electromagnetically switched valve member (10) that, in one switching position, produces the connection between the inflow duct (6) and the outflow duct (8) and, in the other switching position, blocks said connection, with the valve member (10) being rigidly connected to an armature (26) that can be moved, so as to displace liquid, in a guide sleeve (36) of a magnet coil (20) that is inserted into a widened part, which is delimited by an annular shoulder (44), of a passage opening (24) of the magnet coil (20), **characterized by** a damping disc (50) that surrounds the armature (26) and that is arranged between the annular shoulder (44) and an adjacent face end (42) of the guide sleeve (36).

2. Solenoid valve according to Claim 1, **characterized in that** the armature (26) is axially movable in relation to the damping disc (50).

3. Solenoid valve according to one of the preceding claims, **characterized in that** an annular gap (54) between an inner periphery of the damping disc (50) and the armature (26) has a clear width of less than 0.05 mm, and preferably less than 0.025 mm, at least over a part of the movement travel of the armature (26).

4. Solenoid valve according to Claim 3, **characterized in that** the annular gap (54) has a clear width of less than 0.05 mm, and preferably less than 0.025 mm, over the entire movement travel of the armature (26).

5. Solenoid valve according to one of the preceding claims, **characterized in that** the damping disc (50) is axially movable to a limited extent between the annular shoulder (44) and the adjacent face end (42) of the guide sleeve (36).

6. Solenoid valve according to one of the preceding claims, **characterized in that** the damping disc (50) is pressed, at least over a part of the movement travel of the armature (26), against the face end (42) of the guide sleeve (36), or against the annular shoulder (44), by the liquid displaced by the armature (26).

7. Solenoid valve according to one of the preceding claims, **characterized in that** an outer periphery of the damping disc (50) is arranged at a radial distance from an inner wall of the widened part (40) of the passage opening (24).

8. Solenoid valve according to one of the preceding claims, **characterized in that** the damping disc (50) is composed of bronze.

9. Solenoid valve according to one of the preceding claims, **characterized in that** the damping disc is composed of polypropylene sulphide.

10. Solenoid valve according to one of the preceding claims, **characterized in that** the damping disc is slotted.

11. Solenoid valve according to one of Claims 1 to 9, **characterized in that** the damping disc has no discontinuities.

## Revendications

1. Vanne magnétique (2), notamment pour une installation de chauffage et/ou de refroidissement régulée par un liquide, comprenant un boîtier de vanne (4) présentant au moins un canal d'entrée (6) et au moins un canal de sortie (8) et un organe de vanne (10) commuté par voie électromagnétique, qui crée la liaison entre le canal d'entrée (6) et le canal de sortie (8) dans une position de commutation et qui la bloque dans l'autre position de commutation, l'organe de vanne (10) étant connecté rigidement à une armature (26) qui peut être déplacée en refoulant du liquide dans une douille de guidage (36) d'une bobine magnétique (20), qui est insérée dans une partie d'une ouverture de passage (24) de la bobine magnétique (20) élargie et limitée par un épaulement annulaire (44), **caractérisée par** un disque amortisseur (50) entourant l'armature (26), disposé entre l'épaulement annulaire (44) et une extrémité frontale adjacente (42) de la douille de guidage (36).

2. Vanne magnétique selon la revendication 1,
**caractérisée en ce que** l'armature (26) est déplaçable axialement par rapport au disque amortisseur (50).

3. Vanne magnétique selon l'une quelconque des revendications précédentes, **caractérisée en ce qu'**une fente annulaire (54) entre une périphérie interne du disque amortisseur (50) et l'armature (26) présente sur au moins une partie de la course de déplacement de l'armature (26) une largeur intérieure de moins de 0,05 mm et de préférence de moins de 0,025 mm.

4. Vanne magnétique selon la revendication 3,
**caractérisée en ce que** la fente annulaire (54) présente, sur toute la course de déplacement de l'armature (26), une largeur intérieure de moins de 0,05 mm et de préférence de moins de 0,025 mm.

5. Vanne magnétique selon l'une quelconque des revendications précédentes, **caractérisée en ce que** le disque amortisseur (50) est déplaçable axialement de manière limitée entre l'épaulement annulaire (44) et l'extrémité frontale adjacente (42) de la douille de guidage (36).

6. Vanne magnétique selon l'une quelconque des revendications précédentes, **caractérisée en ce que** le disque amortisseur (50), au moins sur une partie de la course de déplacement de l'armature (26), est pressé par le liquide refoulé par l'armature (26) contre l'extrémité frontale (42) de la douille de guidage (36) ou contre l'épaulement annulaire (44).

7. Vanne magnétique selon l'une quelconque des revendications précédentes, **caractérisée en ce qu'**une périphérie extérieure du disque amortisseur (50) est disposée à distance radiale d'une paroi interne de la partie élargie (40) de l'ouverture de passage (24).

8. Vanne magnétique selon l'une quelconque des revendications précédentes, **caractérisée en ce que** le disque amortisseur (50) se compose de bronze.

9. Vanne magnétique selon l'une quelconque des revendications précédentes, **caractérisée en ce que** le disque amortisseur (50) se compose de sulfure de polypropylène.

10. Vanne magnétique selon l'une quelconque des revendications précédentes, **caractérisée en ce que** le disque amortisseur est fendu.

11. Vanne magnétique selon l'une quelconque des revendications 1 à 9, **caractérisée en ce que** le disque amortisseur ne présente aucune interruption.
